# EUROPEAN PATENT SPECIFICATION

(11) **EP 2 419 207 B1**
(45) Date of publication and mention of the grant of the patent: **09.07.2014**
(21) Application number: 10716001.2
(22) Date of filing: 15.04.2010
(51) Int. Cl.: B01J 19/12, H05B 6/46

(54) **COUPLING FOR JOINING CONDUITS**
ROHRKUPPLUNG
JOINT DE TUYAU

(30) Priority: 15.04.2009 GB 0906486
(43) Date of publication of application: 22.02.2012
(73) Proprietor: C-Tech Innovation Limited, Capenhurst Chester CH1 6EH (GB)
(72) Inventor: PERKIN, Robert, Melson, Chester CH2 2JB (GB); MALONEY, Norman, Nr Wrexham LL11 3AF (GB); JONES, Ian, Harry, Flintshire CH6 5HE (GB); KELL, Darren, Cheshire WA15 6BZ (GB); ELLIS, David, Flintshire (GB)
(74) Representative: Boult Wade Tennant
(86) International application number: PCT/GB2010/000760
(87) International publication number: WO 2010/119255

(56) References cited:
- DE-A1- 19 606 517
- DE-A1- 19 631 201
- US-A- 4 207 452
- US-A- 4 851 630
- US-A- 5 340 450

## Description

### Field of the Invention

The present invention relates to an electromagnetic heating reactor and also to a coupling for such a reactor. Electromagnetic heating may use radio frequency energy or microwaves, for instance.

### Background of the Invention

Dielectric heating using microwave or Radio Frequency energy (RF) can provide a thermal energy input to chemical reactions and can accelerate and promote conventional and non-conventional chemical reactions and chemistry. A great amount of pharmaceutical and reaction chemistry development work involves microwaves. RF and microwave heating are volumetric heating techniques, which can rapidly heat reagents directly without the requirement for energy to be transferred to the reagents by radiation, conduction or convection from an external source or medium.

Microwaves may be defined loosely as electromagnetic radiation with a wavelength range from about 1mm to about 1m. However, this may overlap with the RF range, i.e. with wavelengths greater than about 40cm and up to 20m. In any case, dielectric or electromagnetic heating may be described as both microwave and RF heating.

Laboratory and small batch, and in some cases small continuous processing equipment, is available. There are however difficulties in scaling up the application of microwave and RF processes for production scale processing. Larger quantities of reagents at high temperatures and at high pressures introduce both conventional engineering difficulties but more particularly additional technical and engineering barriers when applying microwave energy or RF energy.

At small scales, for example, a small bore quartz glass tube of capillary dimensions can readily contain high internal pressures at elevated temperatures. Throughput and residence time for reagents flowing through such a tube within a reactor however, is limited for capillary tubes and may not be large enough for production purposes in many cases. For larger bore tubes, of the order of e.g. 0.5 to 10cm bore, the wall thickness required to operate with internal pressures of e.g. 20 to 200 bar or higher, becomes very thick. At elevated temperatures of several hundred °C the difficulty becomes greater. Such heavy wall tubing in microwave transparent materials, suitable glass, quartz, polymer, and ceramics may be prohibitively expensive or not technically practical at all.

Many chemical reagents and solvents encountered in chemistry are very aggressive and require very inert and non reactive materials to contain them. Such materials can include for different reagents, fluoropolymers, glass, quartz, ceramics, sapphire, PEI, PP, PE, stainless steel, and other more exotic metal alloys. Microwave and RF electromagnetic containment requires generally a highly electrically conductive enclosure normally having a robust metallic skin of sufficient thickness to reliably carry skin currents in the environments found in chemical process plants. Furthermore, high power application of dielectric energy requires rigorous and robust electromagnetic screening.

Smaller scale equipment may use microwave power of the order of Watts. Higher scale equipment may extend to 100s of kW of dielectric power.

US 2003/0091487 describes the application of elevated pressures to a process fluid during microwave heating and in multiple stages.

US 5,672,316 also describes heating liquid under pressure. The device of US 5,672,316 provides a container around a microwave-transparent pipe so that the pressures inside and outside of the microwave-transparent pipe are substantially equal. The product is collected within the container and drawn out through a pressure restrictor.

However, none of these devices allow a particularly high throughput of product. Therefore, there is required a device that overcomes these problems.

US 4,207,452 describes a microwave absorber surrounding a dielectric tube to absorb microwaves leaking along the dielectric tube and also to cool it.

US 4,851,630 describes a microwave reactive gas generator including a dielectric tube formed from quartz or ceramic.

### Summary of the Invention

In accordance with an aspect of the present invention there is provided a coupling as described in claim 1.

The coupling allows the union of conduits having different properties and a change of materials, whilst maintaining a high pressure differential and microwave integrity within the microwave reactor. The coupling may provide a connection and sealing arrangement for a reactant conduit and also form an electromagnetic screen to reduce or prevent emissions of RF or microwave energy. The expandable electromagnetic shield may surround either or both of the joined conduits and may optionally surround the join between them. The sealed joint may be leakproof, impermeable or watertight. The electromagnetic shield may be made expandable such that when the conduits or other components of a dielectric heating reactor flex, expand, contract or in other ways change shape, shielding is maintained.

Optionally, the expandable electromagnetic shield is telescopic.

The compression fitting allows a high-pressure union between two parts of a conduit, especially where each part is formed from a different material. The telescopic electromagnetic shield provides improved shielding in an environment where relatively large pressure and temperature changes can occur. In other words, expansion and contraction of the various components maybe accommodated by the expandable nature of the electromagnetic shield. Each part of the telescopic electromagnetic shield may be fixed to a different part of the conduit (of different fixed parts of a reactor) so that any expansion or contraction across the joint may be accommodated to maintain screening.

As described in the background section, the terms microwave and radio frequency can be used interchangeably as both may be used to provide similar dielectric heating effects in reactants.

Optionally, the telescopic expandable electromagnetic shield may comprise concentric inner and outer tubes moveable with respect to each other. This is one example type of telescopic shield.

Advantageously, the telescopic expandable electromagnetic shield may comprise a conductive gasket arranged to provide a conductive seal between the inner tube and the outer tube. This conductive gasket improves electrical contact between the two tubes and so may improve electromagnetic shielding, especially when used with microwave or RF induced heating. This also improves dispersion in any skin currents that may form.

Optionally, the connector may be a compressing fitting.

Optionally, the compressing fitting may comprise a ferrule and compression nut. This is one example type of compression fitting that may be used.

Preferably, the compression fitting may further comprise a yieldable sealing gasket. This may improve the sealing properties allowing higher pressures to be used. This may also allow a further relaxation in component tolerance.

Optionally, the coupling may further comprise a fluid coolant supply. This may reduce temperature induced damage to the coupling especially with increased reactant temperature. The fluid may be water. The fluid may flow through passages within the coupling.

Optionally, the coupling may further comprise a temperature controller for regulating the temperature by heating or cooling. This improves regulation of chemical reactions and their repeatability and provides greater flexibility and control. One control aspect may be to prevent heat loss from the reactants.

Optionally, the expandable electromagnetic shield comprises bellows. The bellows may be metal, metal coated or made conductive in another way.

In accordance with a illustrative example, there is provided electromagnetic heating reactor comprising an electromagnetic enclosure having a pressurisable interior and a reactant supply conduit at least partially or wholly enclosed within the pressurisable interior, wherein the pressurisable interior is arranged to at least partially or wholly counterbalance pressure within the reactant supply conduit and further wherein the interior of the reactant supply conduit is sealed against the pressurisable interior. Therefore, the reactant within the reactant supply conduit may be excludable from the pressurisable interior. The reactant supply conduit may pass through the pressurisable interior so that the reactant may exit outside of the pressurisable interior and also outside of the electromagnetic enclosure. This allows a more continuous process and higher throughput. The reactant may therefore flow through the electromagnetic enclosure (providing a barrier for microwaves or RF energy) and be irradiated whilst at an elevated pressure. The pressurisable interior of the electromagnetic enclosure may however, be free from reactant. Typically, the reactants may include chemicals that could otherwise attack a metal electromagnetic enclosure used to contain microwaves and provide a counterbalanced pressure. Excluding the reactant from the interior removes the need to provide further protection to the electromagnetic enclosure and simplifies construction. Electromagnetic heating may also be known as dielectric heating. Counterbalancing the pressure within the reactant supply conduit and the electromagnetic enclosure allows the conduit to be made of thinner and thin material without rupturing.

Optionally, the electromagnetic heating reactor may further comprise a pressure jacket within the electromagnetic enclosure and enclosing the pressurisable interior. This may separate the requirements of the electromagnetic enclosure and the requirements of the pressurisable interior. In other words, the pressurisable interior should have a smaller volume and the electromagnetic enclosure may need to have a highly conductive skin.

Optionally, the pressure jacket may be maintainable at a cooler temperature than that of the reactant supply conduit.

Optionally, the pressure jacket may be microwave and/or radio frequency, RF, transparent.

Advantageously, the reactant supply conduit may comprise an inlet and an outlet exterior to the electromagnetic enclosure. This further prevents reactants from contaminating or attacking the interior of the electromagnetic enclosure.

Optionally, the pressurisable interior may further comprise a pressure inlet. This allows the pressurisable interior to be pressurised and the pressure varied if necessary. The pressurising fluid may be gas, vapour or liquid, for instance and may include the previous gas vapour or liquid in conjunction with a porous solid fill e.g. fibre or thermally insulating material. A liquid pressurising fluid, for example, can allow for modification or moderation of the temperature of the reactants conduit and hence the reactants (possibly just to eliminate heat loss). A liquid or liquid/solid fill may allow the dielectric properties of the cavity to be modified.

Preferably, the reactant supply conduit is microwave and/or radio frequency, RF, transparent or substantially or partially transparent to these wavelengths.

Optionally, the electromagnetic heating reactor may further comprise a pressure equaliser for equalising the pressure within the reactant supply conduit and the pressurisable interior. This pressure equaliser may be an electronic or other system (e.g. mechanical) for automatically maintaining equalisation of pressure between the pressurisable interior and the reactant supply conduit so that a low enough pressure differential may be maintained to prevent over pressure damage to the conduit. This further allows larger diameter reactant supply conduits (typically made from relatively thin or fragile microwave or RF transparent materials) to be used at higher pressures. The pressure equaliser may use pressure sensors to monitor pressure at various positions in the conduit, electromagnetic enclosure or at other locations.

Advantageously, the pressurisable interior may further comprise a pressuring fluid supply.

Optionally, the electromagnetic heating reactor may further comprise a temperature controller for varying the temperature of pressurising fluid or medium. The temperature controller may be an electrical or mechanical thermostat controlling a heater or a cooler to maintain more defined or regulated environmental conditions. This may lead to better controlled and more defined or repeatable reactions.

Preferably, the reactant supply conduit comprises a first material within the electromagnetic enclosure and a second material outside of the electromagnetic enclosure, wherein the first material is microwave and/or RF transparent material and the second material is non-microwave and/or non-RF transparent material. This may involve a change of materials. Reactant may flow continuously through the reactant supply conduit passing through the two different materials.

Optionally, the first material may be selected from the group consisting of glass, polymer, PTFE, quartz and sapphire or any other suitable material.

Preferably, the second material may be metal. Alternatively, the conduit may be coated with a metal or other conductive material or a metal may be coated with a polymer, eg PTFE or other for corrosion resistance.

Optionally, the electromagnetic heating reactor may be arranged to provide electromagnetic energy at different frequencies separately or simultaneously.

Optionally, the electromagnetic heating reactor may be arranged to provide electromagnetic energy from about 100W to several 100kW.

Optionally, the electromagnetic heating reactor may be further arranged to provide pulsed or continuous wave electromagnetic radiation.

Preferably, the electromagnetic heating reactor may be arranged to provide electromagnetic energy at a frequency anywhere between 13MHz and 300GHz.

Optionally, the reactant supply conduit within the electromagnetic enclosure may be coiled. This may increase the time the reactant is exposed to electromagnetic energy and/or allow a faster flow of reactant. This may reduce the overall size of the reactor.

Optionally, the electromagnetic heating reactor may be further arranged to provide electromagnetic energy as any or all of a travelling wave, a standing wave and a multi-mode wave.

Optionally, the electromagnetic heating reactor may be further arranged to maintain reactant within the reactant supply conduit up to 300°C and further up to 800°C by using high temperature materials such as quartz, ceramics, or other such high temperature materials, for instance. The lower range temperatures may be used for polymer reaction supply conduits and the high range temperatures may be used for quartz or ceramic based materials.

Preferably, the reactant supply conduit may be pressurisable anywhere from 0.01 bar to 200 bar or higher. Elevated pressures may be used to prevent boiling of reactants. Alternatively, the reactant supply conduit and/or pressurisable interior may be operated at ambient or atmospheric pressure.

Optionally, the electromagnetic heating reactor may further comprise at least one coupling, as described above, and arranged to couple the first material to the second material of the reactant supply conduit.

### Brief description of the Figures

The present invention may be put into practice in a number of ways and embodiments will now be described by way of example only and with reference to the accompanying drawings, in which:
Fig. 1 shows a schematic diagram of an electromagnetic heating reactor, given by way of example only;
Fig. 2 shows a sectional view of a coupling for an electromagnetic heating reactor such as that shown in Fig. 1;
Fig. 3 shows a schematic diagram of a further example electromagnetic heating reactor; and
Fig. 4 shows a schematic diagram of a further example electromagnetic heating reactor.

It should be noted that the figures are illustrated for simplicity and are not necessarily drawn to scale. Alternative cavity and reactor shapes, sizes, and orientations may be used

### Detailed description of the preferred embodiments

It is advantageous for certain reactions to apply microwave or RF energy under elevated temperatures. Elevated temperatures may also require elevated pressures. However, microwave transparent or low dielectric loss materials are not particularly effective at containing these elevated pressures especially in larger bore conduits at elevated temperatures. Increased temperature and pressure may increase yield or decrease the reaction time, for instance. The use of larger bore conduits can increase throughput of product and reactants. The mechanical stresses in the conduit can increase beyond reasonable and economic engineering design limitations. Furthermore, effective screening is required to prevent microwave or RF energy "leaking" and irradiating external areas, such as those occupied by an operator.

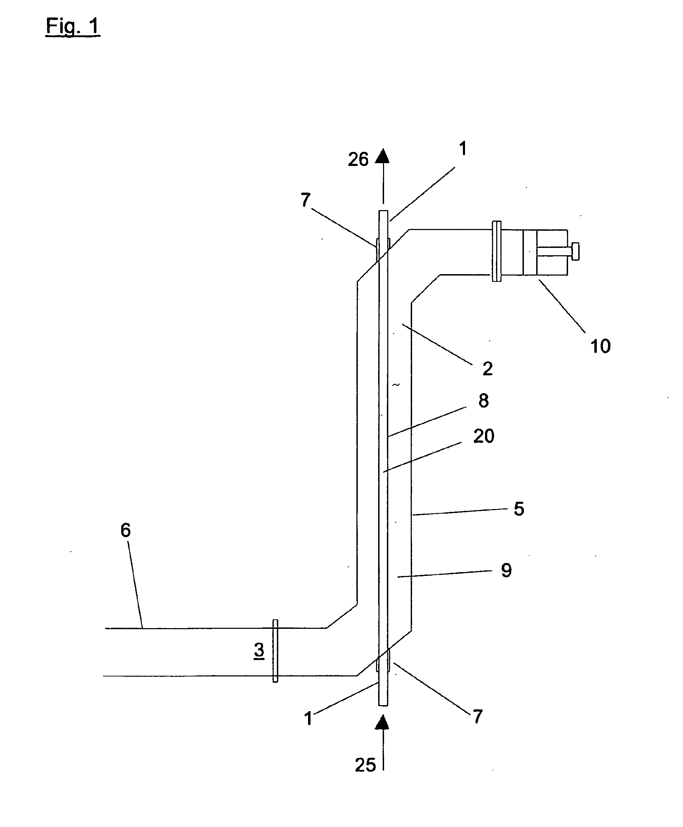

Fig. 1 shows a schematic diagram of a microwave reactor. Fig. 1 shows a microwave or RF electromagnetic enclosure (cavity or chamber) 2 made from a material that does not transmit or radiate energy to the outside. The material may be for instance, metal, as this may be used to contain the dielectric (microwave or RF) energy. The enclosure 2 may be in close proximity to reaction fluids, and catalysts if used. The reaction fluids supplied through a reactant supply conduit 1, which is microwave or RF transparent in a portion 20 passing through the RF chamber 2. This portion 20 may be a quartz tube, for instance. The electromagnetic enclosure 2 may support a travelling wave or especially for larger applications, the cavity 2 may be a larger multi-mode cavity. A further extension of a multi mode cavity or chamber could further include a screening enclosure or cage structure (not shown in this figure) for additional dielectric energy containment.

In use, the microwave reactor shown in Fig 1 provides heating of the chemical reagents drawn or forced through the reactant supply conduit 1. This may be a tube or pipe conveying the reagent, which contains reactant such that it may be passed through a travelling wave or multi mode cavity 2 for microwaves or in a standing wave or travelling wave applicator for lower RF frequencies, for instance. Typically, reactants enter the reactant supply conduit 1 at an entry point 25 and leave at exit point 26. The flow direction can be in the opposite direction to that shown in the figure. Furthermore, the orientation of the device may instead be horizontal or any other orientation.

Fig. 1 shows an entry point 3 for admitting dielectric energy, e.g. microwave or RF energy, into the cavity 2 or chamber. Further multiple (or a single) entry points may be used. The enclosing cavity wall 5 material may be a highly conductive material such as a metal or metal coated. This reduces unwanted or dangerous microwave losses.

Microwave or RF energy may be conveyed to the cavity 2 using a waveguide or coaxial cable 6 from a remote microwave or RF generator (not shown in this figure). The power supply for the microwave or RF generator is not shown or described here but would be familiar to a person skilled in the art of microwave reactors. A coupling 7 helps to contain the electromagnetic energy within the apparatus, especially where the product conduit enters and exits. The coupling 7 also joins the microwave or RF transparent portion 20 of the reactant supply conduit 1 to a non-microwave or RF transparent portion (e.g. a metal or conductive conduit) at the entry 25 and exit 26 points. Therefore, the reactant may flow through microwave (or RF) transparent material when within the cavity 2 but flow through non-microwave (or RF) transparent conduit (or shielded) when outside of the electromagnetic enclosure 2. Fig. 1 shows one coupling at either end of the cavity 2.

The transparent portion 20 of the reactant supply conduit 1 has walls 8 is made from a microwave or RF transparent material such as quartz, glass, sapphire, fluoropolymer, PTFE or other plastics or ceramics material, which readily allows transmission of microwaves (or RF energy) to the fluids or reagents within. The medium 9 or environment surrounding the microwave transparent portion 20 is also a microwave transparent material, which allows transmission of electromagnetic energy to the reactants. This medium may be air or another gas but could be a liquid, fluid, solid or a porous solid. A microwave or RF tuner 10 may tune the cavity to improve electromagnetic propagation into the cavity 2.

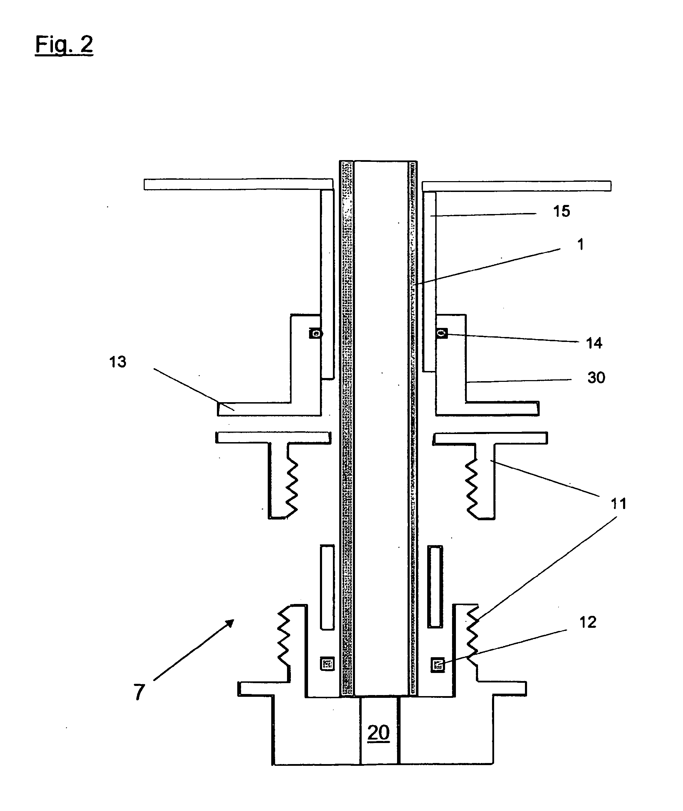

The coupling 7 is shown in more detail and as a sectional view, in Fig. 2. The coupling 7 may hydraulically seal the fluid or reactants and also provide electromagnetic screening to prevent microwave or RF radiation propagating outside of the cavity 2. The coupling comprises a connector for forming an impermeable, sealable or leakproof joint between conduits of the same or different materials. The connector may be for instance, a compressing fitting 11, which may be high pressure hydraulic fitting 11 that may seal the reactant supply conduit 1 where the metal portion joins the RF or microwave transparent portion 20 and/or the electromagnetic enclsoure wall 5.

The compression fitting 11 incorporates a yieldable sealing gasket 12 or compressible packing seal capable of taking up irregularities and any dimensional tolerance that may be present in any of the conduits. Alternative sealing elements may be utilised to provide a seal such as olives or rigid packings, for instance.

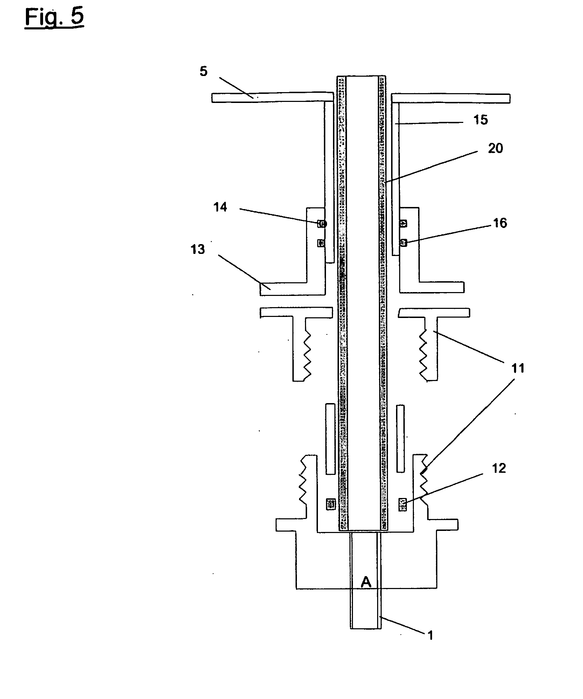

The coupling 7 is provided with an electromagnetic shield 13 or RF choke that is telescopic so that it may expand or contract whilst screening RF or microwave electromagnetic radiation. To further improve RF and microwave screening the telescopic electromagnetic shield 13 may further comprise a conductive gasket 14. In the particular example shown in Fig. 2, the telescopic electromagnetic shield 13 is formed from an inner tube 15 and an outer tube 30. The inner tube 15 and outer tube 30 may be concentric and the outer tube 30 may freely slide over the inner tube with the conductive gasket 14 providing electrical contact between them. This conductive gasket 14 improves the performance of the telescopic electromagnetic shield 13 by permitting skin or surface currents flowing between the inner 15 and outer 30 tubes. Fig. 5 shows an alternative embodiment having a further seal 16 which may be an o-ring, packing or other suitable seal can be employed to contain any counter pressure applied in the cavity 2. The position of the conductive gasket 14 and further seal 16 may alternatively be interchanged.

The inner tube 15 may be a cut-off type choke tube at the entrance to the cavity 2. The reactant supply conduit 1 passes through the inner tube 15 of the telescopic electromagnetic shield 13. Once assembled electromagnetic screening of the reagents' entry into the cavity 2 may be achieved such that allowance may be made for differential thermal expansion of the microwave transparent portion 20 material (e.g. glass or ceramics) and the conducive material of the telescopic electromagnetic shield 13 (e.g. metal), whilst also admitting and sealing the reactant supply conduit 1 from high hydraulic pressures at elevated temperatures. The coupling 7 may allow differential pressures of up to 200 bar or higher with a typical working pressure of 25 bar, for instance.

The electromagnetic transparent portion 20 may be introduced into the compressing fitting 11 in order to receive reactants into the electromagnetic enclosure 2 via position A.

As an alternative, the coupling 7 may be directly heated for instance, electrically or by internal passages, to reduce or prevent heat losses from the reagents when the device is operated at modest temperatures e.g. less than about 200°C. Should product temperatures become very high then a heat transfer medium may also be used to control the temperature of the coupling 7 to maintain the sealing materials and gaskets within their working temperature range. Therefore, polymer sealing materials may be used for the yieldable sealing gasket 12 without requiring graphite or other higher temperature seals, which may be more difficult to use and handle.

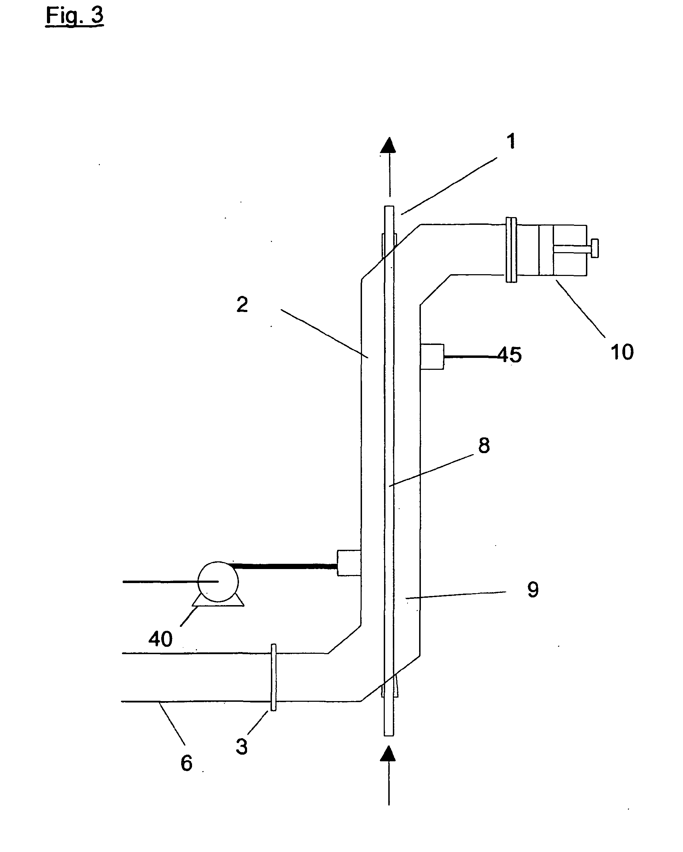

Fig. 3 shows a schematic diagram of an alternative electromagnetic heating reactor. Similar features have been given the same reference numerals. In this arrangement the pressure within the transparent portion 20 of the reactant supply conduit 1 may be counterbalanced by applying pressure to the interior of the cavity 2. The pressure is applied to the pressurisable interior of the cavity 2 by a fluid pump 40. A pressure relief valve 45 may relive excess pressure. Sensors (not shown in this figure) may be placed within the pressurisable interior to provide a feedback signal for controlling the pump 40 and pressure relief valve 45. A control circuit (not shown in this figure) may maintain the correct pressure counterbalance and keep the pressure differential between the interior of the transparent portion 20 of the reactant supply conduit 1 and the pressurisable interior of the cavity 2 low enough to prevent stresses in the walls 8 of the conduit from exceeding their working stress or rupturing.

The fluid pumped by pump 40 may also be temperature controlled so as to provide heating or cooling or reactants.

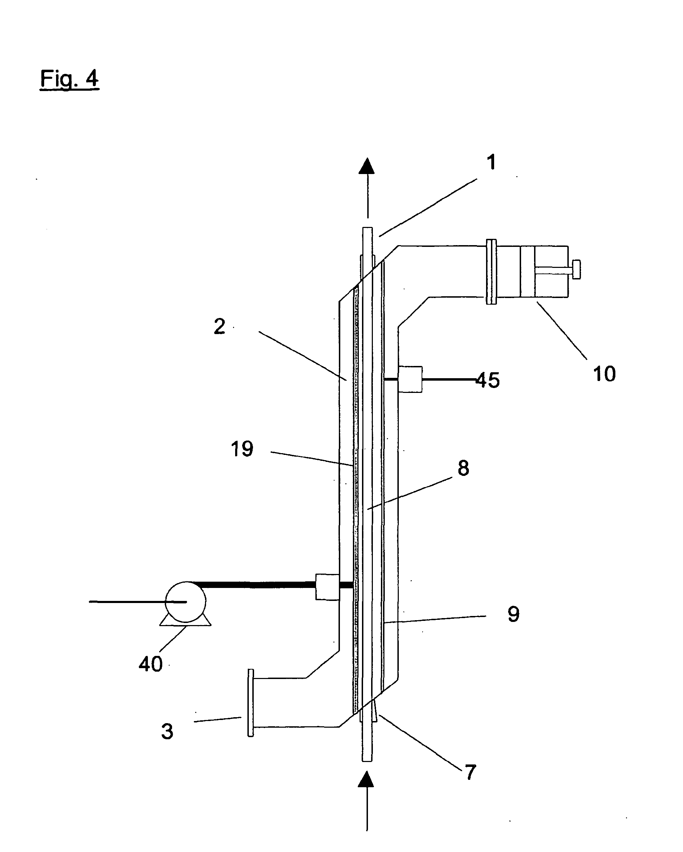

Fig. 4 shows a schematic diagram of an alternative electromagnetic heating reactor. Instead of the entire interior of the cavity 2 being pressurisable, as shown in Fig. 3, a pressure jacket 19 encloses the transparent portion 20 of the reactant supply conduit 1. The interior of the pressure jacket 19 may be pressurised by the pump 40 and relieved by the pressure relief valve 45. The pressure jacket 19 may be formed from electromagnetic transparent material allowing microwaves and/or RF energy to heat the reactant. The pressure jacket 19 may be maintained cooler than the reactant supply conduit 1 by cooling the pressure fluid or other means. Therefore, the pressure jacket 19 may be made from a polymer or other suitable electromagnetic transparent material. The pressure jacket 19 reduces the volume of the pressurisable interior of the cavity 2.

As will be appreciated by the skilled person, details of the above embodiment may be varied without departing from the scope of the present invention, as defined by the appended claims.

For example, the telescopic electromagnetic shield 13 may comprise more than two tubes. Between each further pairs of tubes there may be additional conductive gaskets 14.

The compression fitting may instead be an interference type fitting.

The reactants may include solid reactants including catalysts, liquid and/or gaseous reactants and combinations of these.

The electromagnetic heating reactor may be operated continuously or in batches.

In an alternative embodiment, the electromagnetic shield 13 may be a bellows of conductive material, for instance stainless steel. The bellows may enclose fully or partially the coupling 7.

The coupling 7 may be formed from metal, stainless steel, aluminium or a coated metal including a polymer coated to reduce corrosion.

## Claims

1. A coupling (7) for joining conduits in a dielectric heating reactor comprising:
a connector (11) for forming a sealed joint between conduits; and
an expandable electromagnetic shield (13) arranged to surround joined conduits such that electromagnetic shielding of the joined conduits is maintained in response to dimensional changes due to temperature and/or pressure.

2. The coupling (7) of claim 1, wherein the expandable electromagnetic shield (13) is telescopic.

3. The coupling (7) of claim 2, wherein the telescopic expandable electromagnetic shield (13) comprises concentric inner (15) and outer (30) tubes moveable with respect to each other.

4. The coupling (7) of claim 3, wherein the telescopic expandable electromagnetic shield (13) comprises a conductive gasket (14) arranged to provide a conductive seal between the inner tube (15) and the outer tube (30).

5. The coupling (7) of claim 3 or claim 4, wherein the telescopic expandable electromagnetic shield (13) comprises a sealing gasket (12) arranged to provide a pressure seal between the inner tube (15) and the outer tube (30).

6. The coupling (7) of according to any previous claim, wherein the connector is a compressing fitting.

7. The coupling (7) of claim 6, wherein the compression fitting comprises a ferrule and compression nut.

8. The coupling (7) of claim 6 or claim 7, wherein the compression fitting further comprises a yieldable sealing gasket (12).

9. The coupling (7) according to any previous claim further comprising a fluid coolant supply.

10. The coupling (7) according to any previous claim further comprising a temperature controller for regulating the temperature by heating or cooling.

11. The coupling (7) according to claim 1, wherein the expandable electromagnetic shield (13) comprises bellows.

## Patentansprüche

1. Kupplung (7) zum Verbinden von Leitungen in einem dielektrisch heizenden Reaktor, die aufweist:
einen Verbinder (11), der eine Dichtverbindung zwischen zwei Leitungen ausbildet, und
eine expandierbare elektromagnetische Abschirmung (13), die so angeordnet ist, dass sie die verbundenen Leitungen umgibt,
sodass eine elektromagnetische Abschirmung der verbundenen Leitungen bei temperaturbedingten und/oder druckbedingten Maßänderungen aufrechterhalten wird.

2. Kupplung (7) nach Anspruch 1, worin die expandierbare elektromagnetische Abschirmung (13) teleskopisch ist.

3. Kupplung (7) nach Anspruch 2, worin die teleskopisch expandierbare elektromagnetische Abschirmung (13) ein inneres und ein äußeres Rohr aufweist, die konzentrisch angeordnet und relativ zueinander verschiebbar sind.

4. Kupplung (7) nach Anspruch 3, worin die teleskopisch expandierbare elektromagnetische Abschirmung (13) eine leitfähige Dichtung (14) aufweist, die zur Herstellung einer leitfähigen Abdichtung zwischen dem inneren Rohr (15) und dem äußeren Rohr (30) angeordnet ist.

5. Kupplung (7) nach Anspruch 3 oder Anspruch 4, worin teleskopisch die expandierbare elektromagnetische Abschirmung (13) eine Dichtungsmanschette (12) aufweist, die zur Herstellung einer Druckabdichtung zwischen dem inneren Rohr (15) und dem äußeren Rohr (30) ausgebildet ist.

6. Kupplung (7) nach einem der vorhergehenden Ansprüche, worin der Verbinder eine Quetschverschraubung ist.

7. Kupplung (7) nach Anspruch 6, worin die Quetschverschraubung einen Quetschring und eine Überwurfmutter aufweist.

8. Kupplung (7) nach Anspruch 6 oder Anspruch 7, worin die Quetschverschraubung ferner eine nachgiebige Dichtungsmanschette (12) aufweist.

9. Kupplung (7) nach einem der vorhergehenden Ansprüche, die ferner eine Zufuhr für ein fluides Kühlmittel aufweist.

10. Kupplung (7) nach einem der vorhergehenden Ansprüche, die ferner eine Temperatursteuerung zum Regeln der Temperatur durch Heizen oder Kühlen aufweist.

11. Kupplung (7) nach Anspruch 1, worin die expandierbare elektromagnetische Abschirmung (13) ein Wellrohr oder einen Faltenbalg aufweist.

## Revendications

1. Couplage (7) pour joindre des conduits dans un réacteur de chauffage diélectrique, comprenant :
un connecteur (11) pour former un joint scellé entre des conduits ; et
un écran électromagnétique expansible (13) agencé pour entourer des conduits joints de telle sorte que l'écran électromagnétique des conduits joints est maintenu en réponse à des changements dimensionnels dus à la température et/ou la pression.

2. Couplage (7) selon la revendication 1, dans lequel l'écran électromagnétique expansible (13) est télescopique.

3. Couplage (7) selon la revendication 2, dans lequel l'écran électromagnétique télescopique expansible (13) comprend des tubes intérieur (15) et extérieur (30) concentriques déplaçables l'un relativement à l'autre.

4. Couplage (7) selon la revendication 3, dans lequel l'écran électromagnétique expansible télescopique (13) comprend un joint d'étanchéité conducteur (14) agencé pour réaliser un joint conducteur entre le tube intérieur (15) et le tube extérieur (30).

5. Couplage (7) selon la revendication 3 ou la revendication 4, dans lequel l'écran électromagnétique expansible télescopique (13) comprend un joint d'étanchéité de scellement (12) agencé pour réaliser un joint de pression entre le tube intérieur (15) et le tube extérieur (30).

6. Couplage (7) selon l'une quelconque des revendications précédentes, dans lequel le connecteur est un montage à compression.

7. Couplage (7) selon la revendication 6, dans lequel le montage à compression comprend une ferrure et un écrou de compression.

8. Couplage (7) selon la revendication 6 ou la revendication 7, dans lequel le montage à compression comprend en outre un joint d'étanchéité de scellement résilient (12).

9. Couplage (7) selon l'une quelconque des revendications précédentes, comprenant en outre une amenée d'agent de refroidissement fluide.

10. Couplage (7) selon l'une quelconque des revendications précédentes, comprenant en outre un dispositif de commande de température pour réguler la température par chauffage ou par refroidissement.

11. Couplage (7) selon la revendication 1, dans lequel l'écran électromagnétique expansible (13) comprend un soufflet.
